# FASCICULE DE BREVET EUROPEEN

(11) **EP 4 202 343 B1**
(45) Date de publication et mention de la délivrance du brevet: **25.06.2025**
(21) Numéro de dépôt: 22215533.5
(22) Date de dépôt: 21.12.2022
(51) Int. Cl.: F28D 20/02

(54) **PROCÉDÉ DE PRÉPARATION D'UN SYSTÈME DE STOCKAGE THERMIQUE ET DISPOSITIF ASSOCIÉ**
VERFAHREN ZUR HERSTELLUNG EINES WÄRMESPEICHERSYSTEMS UND VORRICHTUNG DAFÜR
METHOD FOR PREPARING A THERMAL STORAGE SYSTEM AND ASSOCIATED DEVICE

(30) Priorité: 27.12.2021 FR 2114537
(43) Date de publication de la demande: 28.06.2023
(73) Titulaire: Commissariat à l'Energie Atomique et aux Energies Alternatives, 75015 Paris (FR)
(72) Inventeur: PIQUARD, Louis, 38054 GRENOBLE Cedex 09 (FR); BENTIVOGLIO, Fabrice, 38054 GRENOBLE Cedex 09 (FR); BLOT, Menelik, 38054 GRENOBLE Cedex 09 (FR)
(74) Mandataire: Hautier IP

(56) Documents cités:
- EP-A1- 3 489 608
- EP-A2- 2 308 943
- FR-A1- 3 082 924

## Description

La présente invention concerne les Systèmes de Stockage Thermique (SST) par un mélange de Matériaux à Changement de Phase (MCP) Solide-Liquide.

Tous les SST utilisant un mélange, eutectique ou non, de deux MCPs ou plus sont susceptibles d'être concernés par l'invention, et plus particulièrement les MCPs présentant un problème de surfusion.

La présente invention trouvera son application pour des SST sur des réseaux de chaleur, urbains, ruraux ou industriels ainsi que dans le stockage de l'énergie solaire. L'invention pourra également trouver des applications dans l'habitat, le transport thermique hors réseaux (camions, bateaux...) et le management thermique de systèmes embarqués. Un procédé selon le préambule de la revendication 1 est connu par exemple du document FR 3 082 924 A1 (D1).

### ETAT DE LA TECHNIQUE

Les systèmes de stockage thermique (SST) permettent notamment une meilleure intégration des énergies renouvelables intermittentes lorsqu'ils sont insérés sur un réseau de chaleur. Les SST par chaleur latente ont l'avantage d'avoir des densités de stockages plus élevées (jusqu'à plus de 100kWh/m³) que les technologies par chaleur sensible, principalement utilisées aujourd'hui. Toutefois les performances d'un SST par chaleur latente sont intimement liées aux propriétés du Matériau à Changement de Phase (MCP) utilisé pour stocker la chaleur latente. Il est donc nécessaire de proposer de nouveau MCP plus performant, plus stable chimiquement, inoffensif et si possible biosourcé.

Dans ce contexte les mélanges de MCPs sont de plus en plus étudiés, car ils permettent notamment d'abaisser la température de fusion du mélange par rapport à celles de chacun des composants du mélange. Les eutectiques binaires, des mélanges de deux matériaux dans des proportions spécifiques permettant d'obtenir le même comportement en fusion qu'un corps pur, sont particulièrement étudiés. Ces différents mélanges permettent d'élargir le catalogue de MCPs disponible et donc d'aller chercher de nouvelles températures d'application.

Par exemple, pour une utilisation sur les réseaux de chaleur, les températures maximales fournies par le réseau ont tendance à diminuer et le développement de nouveaux MCPs adaptés à ces températures plus faibles est alors nécessaire. Une solution consiste à utiliser des mélanges de plusieurs MCPs, individuellement utilisés pour des températures de stockage plus élevées. Le xylitol et l'érythritol, à titre d'exemple, sont deux alcools de sucre identifiés comme des MCPs prometteurs pour des applications entre 90°C et 120°C. Toutefois, ces deux matériaux peuvent former un eutectique binaire avec une température de fusion permettant des applications à 80°C, mieux adapté aux températures des sous-stations de réseau de chaleur urbain.

Des compositions de mélanges pour diverses applications sont décrites dans la littérature scientifique.

A l'échelle du laboratoire, la préparation de ces mélanges est relativement simple et est souvent réalisée en mélangeur ou agitateur de type Turbula^{®}. Les différents composants du mélange sont broyés et agités sous forme de poudre pour homogénéiser le produit final avant son utilisation comme matériau de stockage thermique.

Habituellement, les MCPs à l'état solide, notamment sous forme de poudre, sont mélangés et livrés sous cette forme pour ensuite effectuer le remplissage des cuves des SST sous leur forme solide ou éventuellement directement sous forme liquide.

Pour des cuves de stockage thermique pouvant utiliser plusieurs tonnes de MCPs, la préparation du mélange homogène sous forme solide peut s'avérer extrêmement couteuse et représente un frein conséquent à l'utilisation de ces mélanges de MCPs, pourtant prometteurs.

Par ailleurs, il existe des systèmes de stockage thermique par MCP qui comprennent des systèmes d'injection de gaz configurés pour générer des bulles de gaz dans la partie inférieure du stockage et qui remontent d'injection de gaz est utilisé pour rompre la surfusion de certains MCPs comme les alcools de sucre dans une optique d'amorçage de la cristallisation des MCPs utilisés.

La présente invention a pour but de proposer une solution qui permet de préparer un système de stockage thermique avec un mélange de MCPs qui soit facile à mettre en œuvre et peu couteuse.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon l'invention prévoit un procédé de préparation d'un système de stockage thermique (SST) par un mélange de matériaux à changement de phase (MCP) liquide/solide comprenant :
- une cuve de stockage d'énergie thermique destinée à recevoir le mélange de MCPs, et
- un système de circulation plongeant dans la cuve, destiné à la circulation d'un fluide caloporteur issu d'un réseau externe de circulation du fluide caloporteur, pour stocker et extraire de la chaleur du mélange de MCPs, et
- un dispositif d'injection de gaz configuré pour former des bulles de gaz en partie inférieure de la cuve dans le mélange de MCPs,
caractérisé en ce qu'il comprend les étapes suivantes :
- d'introduction dans la cuve, à l'état solide, de chaque MCP, destiné à former le mélange de MCPs
- de chauffage de la cuve par la circulation du fluide caloporteur chaud dans le système de circulation pour faire passer chaque MCP introduit dans la cuve de l'état solide à l'état liquide,
- d'agitation par le dispositif d'injection de gaz des MCPs à l'état liquide dans la cuve pour obtenir le mélange de MCPs à l'état liquide.

Ce procédé de préparation permet de remplir directement le SST avec chaque composant du mélange final, ce qui permet de complètement supprimer une étape jusqu'ici obligatoire: la confection et l'homogénéisation du mélange sous forme solide, notamment de poudre, avant remplissage. Ce procédé a donc l'avantage d'être bien moins couteux et est relativement simple à mettre en œuvre.

De plus, l'agitation par bullage est peu intrusive et relativement simple à mettre en œuvre au cours du procédé de préparation. L'agitation créée par bullage est certes moins intense, mais plus homogène qu'une agitation mécanique par hélice et permet plus facilement d'agiter l'ensemble de la cuve.

Selon ce procédé, le mélange est donc réalisé à chaud sous forme liquide directement dans la cuve du SST.

Préférentiellement chaque MCP est introduit dans la cuve sous forme de poudre.

Avantageusement, le procédé ne comprend pas de mélange des MCPs à l'état solide, préalable à l'introduction des MCPs dans la cuve.

Un autre aspect concerne un système de stockage thermique par un mélange de matériaux à changement de phase (MCP) liquide/solide pour la mise en œuvre du procédé tel que décrit ci-dessus comprenant :
- une cuve (1) de stockage d'énergie thermique destinée à recevoir le mélange de MCP, et
- un système de circulation plongeant dans la cuve (1), destiné à la circulation d'un fluide caloporteur issu d'un réseau externe de circulation du fluide caloporteur, pour stocker et extraire de la chaleur du mélange de MCP, et
- un dispositif d'injection de gaz configuré pour former des bulles de gaz en partie inférieure de la cuve dans le mélange de MCP permettant de générer une agitation des MCP à l'état liquide dans la cuve pour obtenir le mélange de MCP à l'état liquide
- un module d'introduction dans la cuve, à l'état solide, de chaque MCP, destiné à former le mélange, le module d'introduction étant amovible de sorte que le système de stockage thermique est apte à prendre une première configuration de préparation dans laquelle le module d'introduction est agencé sur la cuve pour permettre l'introduction dans la cuve de chaque MCP, à l'état solide, destiné à former le mélange de MCPs, et à prendre une deuxième configuration de fonctionnement, dans laquelle le module d'introduction est retiré ne permettant pas l'introduction dans la cuve de chaque MCP, à l'état solide, destiné à former le mélange de MCPs,.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

Les figures 1A à 1D représentent les différentes étapes du procédé selon un premier mode de réalisation de l'invention,

Les figures 2A à 2D représentent les différentes étapes du procédé selon un deuxième mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le chauffage de la cuve est au moins partiellement simultané à l'introduction dans la cuve de chaque MCP à l'état solide. En effet, un MCP sous forme de solide et notamment de poudre occupe beaucoup plus de volume qu'à l'état liquide, il peut être avantageux de faire fondre le MCP au moins en partie simultanément à son introduction dans la cuve.

Selon un exemple, l'agitation est au moins partiellement simultanée au chauffage. Préférentiellement, l'agitation débute dès que le ou les MCP introduit(s) est / sont à l'état liquide. Préférentiellement, l'agitation se poursuit pendant une durée prédéfinie.

Selon un exemple, chaque MCP est introduit dans la cuve sous forme de poudre.

Selon un exemple, chaque MCP introduit lors de l'étape d'introduction dans la cuve est à température ambiante entre 20 et 25°C.

Selon un exemple, l'introduction dans la cuve est réalisée par au moins une canne de transfert de poudre introduite dans la cuve.

Selon un exemple, le chauffage de la cuve est réalisé à une température supérieure aux températures de fusion de chaque MCP.

Selon un exemple, le procédé ne comprend pas de mélange des MCPs à l'état solide, préalable à l'introduction des MCPs dans la cuve.

Selon un exemple, l'agitation est réalisée par les bulles de gaz, le gaz étant choisi parmi le groupe comprenant de l'air, ou un gaz inerte tel que de l'azote. En effet, il est possible de buller avec un autre gaz que de l'air pour éventuellement protéger, par un ciel de gaz inerte, les composants du mélange d'une potentielle dégradation chimique lors de l'homogénéisation à chaud en phase liquide.

Selon un exemple, le procédé comprend une étape de mise en place et de retrait du dispositif d'injection de gaz dans la cuve.

Le procédé comprend une étape de refroidissement du mélange de MCP à l'état liquide par la circulation du fluide caloporteur froid dans le système de circulation pour cristalliser le mélange de MCP.

Pour la suite de la description, on entend par 'haut' et 'bas', ou leurs dérivés, une qualité de positionnement relatif d'un élément du SST lorsque celui-ci est installé de façon fonctionnelle, le 'haut' étant orienté à l'opposé du sol et le 'bas' étant orienté vers le sol. L'extrémité/la partie supérieure se situe en haut et l'extrémité/la partie inférieure se situe en bas.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

L'amont et l'aval, l'entrée, la sortie, en un point donné sont pris en référence au sens de circulation du fluide.

La numérotation premier, deuxième, troisième, etc. nième doit s'entendre sans limitation et sans lien avec la nécessité d'avoir nième-1 ou un nième+1.

L'invention concerne un Système de Stockage Thermique (SST) et un procédé de préparation d'un SST. Le stockage de l'énergie thermique permet à la chaleur d'être utilisée en différé. La chaleur peut être stockée sous plusieurs formes. L'invention s'attache au stockage sous la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. À l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

La présente invention concerne un procédé de préparation d'un système de stockage thermique par mélange de matériaux changement de phase (MCP).

L'invention s'applique particulièrement pour des systèmes comprenant plusieurs matériaux à changement de phase sous forme de mélange. Le mélange de matériaux à changement de phase comprend au moins deux matériaux à changement de phase. L'invention concerne des mélanges à deux, trois, quatre, cinq, six, sept, huit, neuf, dix, matériaux à changement de phase, voire plus, peuvent être envisagés.

L'invention s'applique à tous les MCPs solide / liquide. Les MCP solide/ liquide s'entendent comme des matériaux qui changent de phase entre un état solide et un état liquide en fonction de sa température. Quand sa température est au-dessus de sa température de fusion, le MCP est à l'état liquide et quand sa température est au-dessous de sa température de fusion, le MCP est à l'état solide.

Plus particulièrement, l'invention est avantageuse pour les MCPs sujets au phénomène de surfusion. La surfusion est la capacité du MCP à descendre sous le point de fusion thermodynamique point de cristallisation tout en restant sous forme liquide. Pour l'invention, un MCP est considéré comme sujet à la surfusion à partir d'un degré de surfusion de 2 °C, préférentiellement 5 °C, ce qui peut alors empêcher la décharge du SST.

Pour l'invention, la surfusion est calculée comme correspondant à la différence entre la température de fusion à l'équilibre thermodynamique et la température réelle de cristallisation.

Préférentiellement, les MCP sont choisis parmi les composés organiques et notamment les alcools de sucres appartenant à la famille des polyols, préférentiellement le sorbitol, le xylitol, l'arabitol, l'adonitol ou éventuellement l'érythritol ou le mannitol ainsi que leurs mélanges ou les produits dérivés d'alcools de sucres comme l'isosorbide et les produits dérivés de l'isosorbide ou leurs mélanges. Des mélanges des composés organiques peuvent être utilisés. Les MCP ci-dessus listés sont extraits des plantes et peuvent être qualifiés de biosourcés.

Avantageusement, les MCPs choisis pour former un mélange de MCPs 4 sont miscibles à l'état liquide pour pouvoir former un mélange homogène après agitation. Préférentiellement, les MCPs choisis pour former un mélange de MCPs 4 des températures de fusion relativement proche, de sorte à éviter une surchauffe trop importante par rapport au point de fusion lors de l'état de chauffage.

Le système de stockage d'énergie thermique selon l'invention comprend une cuve 5 de stockage d'énergie thermique destinée à recevoir le mélange de MCPs 4.

Le système de stockage thermique selon l'invention comprend également un système de circulation plongeant dans la cuve 5 destiné à la circulation de fluide caloporteur issu d'un réseau externe de circulation du fluide caloporteur pour stocker et extraire la chaleur du mélange de MCPs 4.

Le système de stockage d'énergie thermique selon l'invention est ainsi du type tube-calandre.

Le système de circulation d'un fluide caloporteur forme un échangeur thermique interne à la cuve 5. L'échangeur thermique interne comprend préférentiellement un faisceau 6 de tubes, notamment à ailettes, assemblé entre un collecteur inférieur 9 et un collecteur supérieur 10. La cuve 5 est également dénommée calandre, préférentiellement cylindrique pour des raisons de tenue mécanique. En fonctionnement, le fluide caloporteur circule à l'intérieur des tubes et échange sa chaleur avec le mélange de MCPs 4 contenu dans la cuve 5.

Avantageusement, la cuve 5 s'étend suivant une direction principale verticale. Avantageusement, l'échangeur thermique interne s'étend suivant une direction verticale, le faisceau 6 de tubes s'étend verticalement entre le collecteur inférieur 9 et le collecteur supérieur 10, préférentiellement respectivement disposés aux extrémités inférieure et supérieure de la cuve 5. Le collecteur inférieur 9 et le collecteur supérieur 10 sont connectés à un réseau externe de circulation de fluide caloporteur respectivement par une tubulure d'entrée ou de sortie du fluide caloporteur 8, 7.

Avantageusement, la cuve 5 est configurée pour permettre le remplissage de la cuve 5. À titre d'exemple, la cuve 5 peut comprendre un couvercle 18 amovible pour permettre le remplissage de la cuve 5 ou encore un couvercle muni de trappes de remplissage ou encore la cuve comprend une trappe sur une virole sur le côté du système.

Le système de stockage thermique selon l'invention comprend avantageusement un dispositif d'injection de gaz 11 configuré pour former des bulles 12 de gaz en partie inférieure de la cuve 5 dans le mélange de MCPs 4. On entend par bulles de gaz, également un filet de gaz. Dans la description, l'utilisation du terme bulles ou bullage comprend donc le mode de réalisation dans lequel le débit de gaz produit une injection continue de gaz formant un filet de gaz dans la cuve, plus précisément dans le ou les MCPS contenu(s) dans la cuve. L'agitation est générée de manière équivalente par les bulles 12 ou par un filet de gaz. Ainsi, les bulles 12 de gaz assurent une agitation du ou des MCP(s) à l'état liquide dans la cuve 5 depuis la partie inférieure jusqu'à la partie supérieure, lors de leur remontée. Les bulles 12 de gaz montent dans le stockage par différence de densité, permettant de mélanger l'ensemble du volume de la cuve 5.

Selon un mode de réalisation, le dispositif d'injection de gaz 11 comprend un circuit de gaz comprenant avantageusement un ou plusieurs injecteur(s) 19 de gaz dans la cuve 5 directement au contact des MCP(s) et préférentiellement en partie inférieure de la cuve 5.

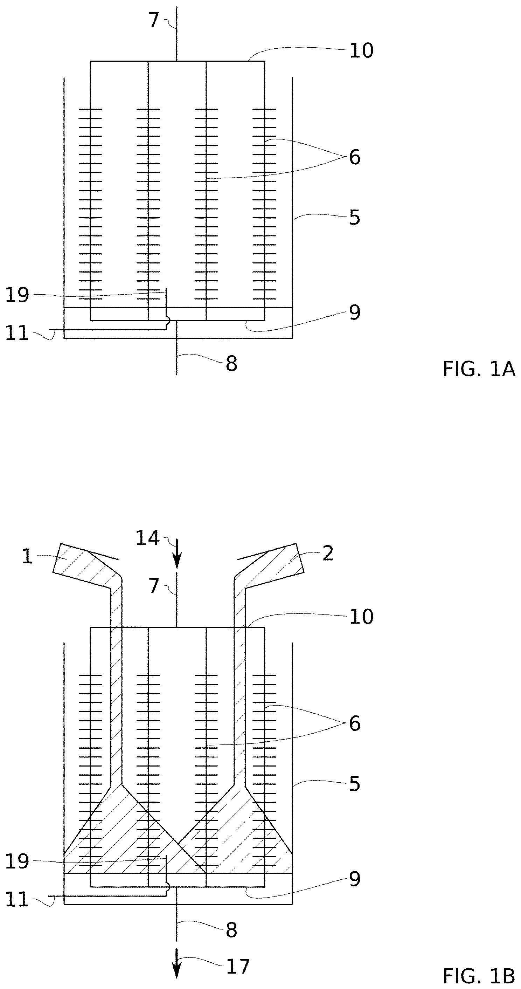

Selon une première possibilité, le dispositif d'injection de gaz 11 est agencé dans la structure de la cuve 5. Le dispositif d'injection de gaz 11 est fixe dans le système de stockage thermique. Préférentiellement, l'injecteur 19 est fixe comme illustré aux figures 1A à 1D. Selon une possibilité, l'injecteur 19 s'étend ainsi depuis la partie inférieure de la cuve 5 en direction de la partie supérieure de la cuve 5. Avantageusement, l'injecteur 19 débouche bien en partie inférieure de la cuve 5.

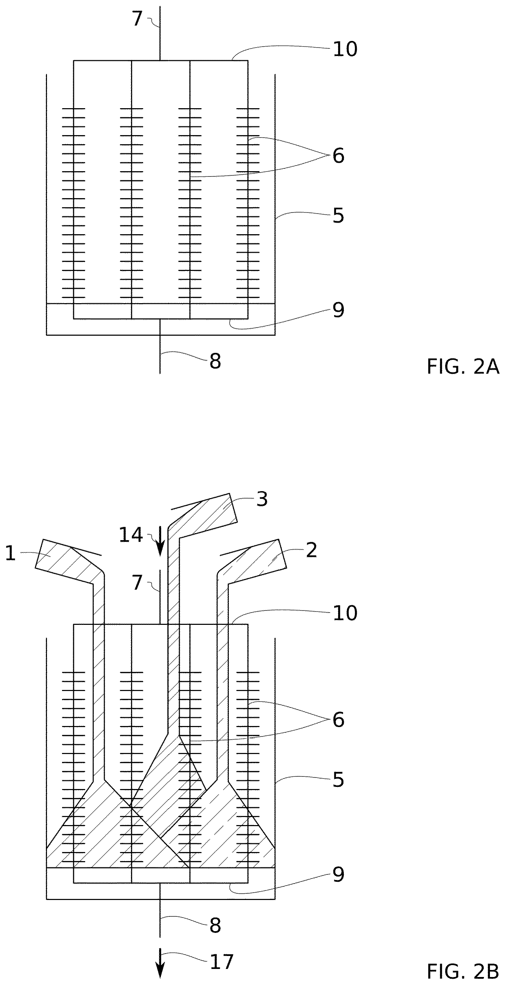

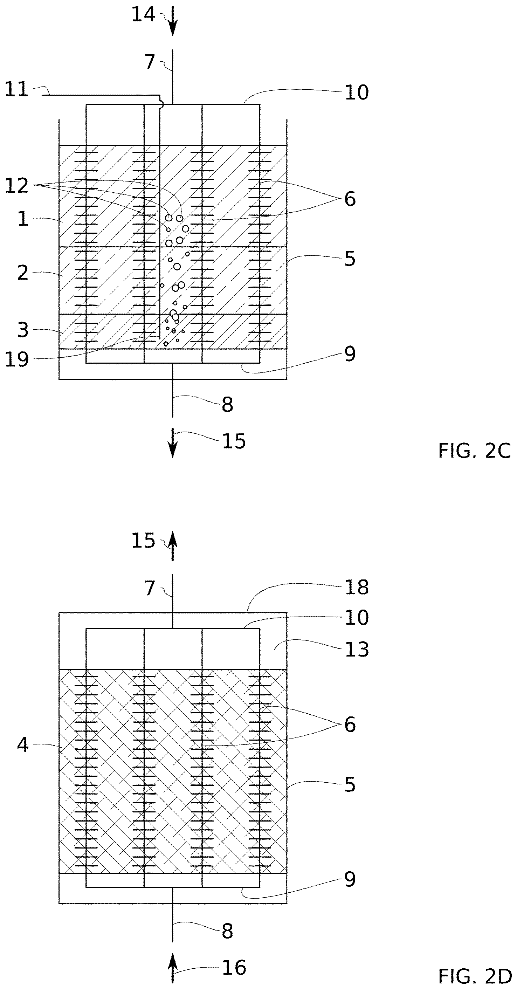

Selon une deuxième possibilité, le dispositif d'injection de gaz 11 est rapporté dans la cuve 5 en fonction des besoins. Le dispositif d'injection de gaz 11 est amovible. Plus précisément, le dispositif comprend au moins une canne d'injection de gaz temporaire se terminant par un injecteur 19. Ainsi, l'injecteur 19 est amovible comme illustré aux figures 2A à 2D. Dans ce cas-là, la canne d'injection de gaz temporaire s'étend depuis la partie supérieure de la cuve 5 jusqu'à la partie inférieure de la cuve 5 et se termine par l'injecteur 19 où il débouche. L'injecteur 19 libère donc bien le gaz en partie inférieure de la cuve 5 comme illustrée en figure 2C.

Suivant les modes de réalisations, le dispositif d'injection de gaz 11 peut comprendre de 1 à 300 injecteurs 19.

Préférentiellement, le gaz injecté n'a pas de fonction de fluide caloporteur. Le gaz injecté est un fluide distinct du fluide caloporteur circulant dans le faisceau 6 de tubes du système de circulation du fluide caloporteur.

Le gaz est choisi parmi de l'azote ou de l'argon ou l'hélium ou éventuellement de l'air. Les gaz inertes sont avantageux pour éviter les problèmes de compatibilité avec l'air ambiant de certains MCP tels que les alcools de sucre, qui peuvent pour certains réagir avec l'oxygène et s'oxyder. L'azote présente l'avantage d'être un gaz inerte limitant l'oxydation du MCP tout en ayant un coût plus faible que l'argon. Le gaz est tel qu'il reste à l'état gazeux dans les conditions de pression et de température d'utilisation du SST selon l'invention. Le gaz est donc un gaz monophasique dans les conditions de l'invention. L'argon et l'azote satisfont cette condition en présentant des valeurs de températures de liquéfaction très inférieure à 0 °C. À titre d'exemple, l'argon ou l'azote qui présentent une température d'ébullition très inférieure à 0 °C à la pression atmosphérique (-185,8 °C pour l'argon et -195,79 °C pour l'azote)

Suivant un mode de réalisation, la cuve 5 du SST comprend un ciel gazeux 13. Le ciel gazeux 13 comprend avantageusement au moins le gaz injecté par le dispositif d'injection de gaz 11.

Avantageusement, la cuve 5 comprend un ciel gazeux 13 disposé au-dessus du mélange de MCP 4. Le ciel gazeux 13 se situe entre la surface supérieure du mélange de MCP 4 et le plafond de la cuve 5. Le collecteur supérieur 10 et le collecteur inférieur 9 peuvent former respectivement au moins partiellement le plafond de la cuve 5 et le fond de la cuve 5. Le plafond de la cuve 5 est avantageusement formé par le couvercle 18.

Selon l'invention, le système de stockage thermique comprend un module d'introduction dans la cuve 5 à l'état solide, de chaque MCP, destiné à former le mélange de MCPs 4.

Avantageusement, le système de stockage thermique est apte à prendre une première configuration, dite de préparation, dans laquelle le module d'introduction est en place pour permettre l'introduction de chaque MCP, destiné à former le mélange de MCPs 4 à l'état solide dans la cuve 5 et une deuxième configuration, dite de fonctionnement, dans laquelle le module d'introduction est retiré. Avantageusement, dans la première configuration, le module d'introduction est agencé sur et éventuellement dans la cuve 5 pour permettre l'introduction des MCPs et dans la deuxième configuration, le module d'introduction est retiré de la cuve 5, il ne permet alors plus l'introduction des MCPs dans la cuve 5.

Le module d'introduction est configuré pour introduire dans la cuve 5, chaque MCP destinée à former le mélange de MCPs 4, sous une forme solide.

Selon une possibilité, le module d'introduction comprend au moins une canne de transfert amovible qui est insérée dans la cuve 5 lors de l'introduction des MCPs1,2,3. Selon une possibilité, le module d'introduction comprend une canne de transfert amovible pour chaque MCP destiné à former le mélange de MCPs 4. Ainsi le module d'introduction comprend plusieurs cannes de transfert utilisées simultanément et préférentiellement respectivement pour chaque MCP.

Préférentiellement, pour permettre le positionnement du module d'introduction dans la cuve 5, au cours du procédé selon l'invention, la cuve 5 est ouverte préférentiellement en partie supérieure ou munie de trappes de remplissage, qui peuvent aussi être situées sur la calandre 5 en haut de la cuve de stockage au-dessus du niveau final de MCP. Avantageusement, le couvercle 18 de la cuve 5 est ouvert.

Préférentiellement, la canne de transfert s'étend depuis la partie supérieure de la cuve 5 en direction de la partie inférieure de la cuve 2 de sorte à introduire chaque MCP en partie inférieure de la cuve 5.

Avantageusement, le module d'introduction est configuré pour permettre l'introduction de chaque MCP à l'état solide, préférentiellement à l'état de poudre.

L'invention concerne un procédé de préparation d'un système de stockage thermique.

Le procédé est également un procédé de remplissage de la cuve 5 d'un SST tel que décrit ci-dessus.

Le procédé selon l'invention comprend plusieurs étapes décrites ci-dessous.

Selon l'invention, le procédé comprend une étape d'introduction dans la cuve 5, à l'état solide, de chaque MCP 1,2, 3, destiné à former le mélange de MCPs 4.

Préférentiellement, chaque MCP 1,2, 3 est introduit à l'état de poudre.

Selon une première possibilité, l'étape d'introduction comprend l'introduction d'un MCP 1,2, 3 à la fois. C'est-à-dire qu'il est d'abord introduit le premier MCP 1, puis le deuxième MCP 2 et ainsi de suite. Selon cette première possibilité, chaque MCP est introduit par le module d'introduction, par exemple par la ou les mêmes cannes de transfert.

Selon une deuxième possibilité, l'étape d'introduction comprend l'introduction d'au moins deux MCPs 1,2 à la fois. C'est-à-dire que le premier MCP 1 et le deuxième MCP 2 sont introduits par le module d'introduction en même temps préférentiellement par des cannes de transferts différentes.

Selon l'invention, les MCPs 1, 2, 3 destinés à former le mélange de MCPs 4 ne sont pas mélangés avant leur introduction dans la cuve 5.

L'étape d'introduction est avantageusement réalisée à température ambiante, c'est-à-dire comprise entre 20 et 25 °C. Plus précisément, chaque MCP 1,2, 3 introduits dans la cuve 5 est à une température ambiante préférentiellement comprise entre 20 et 25 °C.

Le procédé selon l'invention comprend une étape de chauffage de la cuve 5, avantageusement par la circulation du fluide caloporteur chaud dans le système de circulation. On entend fluide caloporteur chaud et fluide caloporteur froid par rapport à la température de la cuve 5 et plus particulièrement du MCP 1, 2, 3 ainsi quand on parle de fluide caloporteur chaud, c'est qu'il est plus chaud que le ou les MCPs 1,2, 3 que le mélange de MCPs 4 contenu(s) dans la cuve 5, à l'inverse quand on parle de fluide caloporteur froid, c'est qu'il est plus froid que le ou les MCPs 1, 2, 3 que le mélange de MCPs 4 contenu(s) dans la cuve 5.

Selon une possibilité, l'étape de chauffage est au moins partiellement simultanée à l'étape d'introduction dans la cuve 5. Selon cette possibilité, lors de l'étape d'introduction du MCP 1, 2, 3 à l'état solide, celui-ci va être chauffé, préférentiellement au-dessus de sa température de fusion, par la circulation du fluide caloporteur chaud dans le système de circulation permettant ainsi de faire passer le MCP 1 ,2, 3 introduit dans la cuve de l'état solide à l'état liquide. Cette possibilité est avantageuse puisque le volume du MCP à l'état de poudre est très nettement supérieur au volume du MCP à l'état liquide. Ainsi, pour permettre l'introduction de chaque MCP destiné à former le mélange de MCPs 4, il peut être nécessaire de réduire le volume une fois introduit dans la cuve 5 ou au cours de leur introduction.

Avantageusement, le fluide caloporteur chaud 14 pénètre par la tubulure d'entrée 7 dans le système de circulation du fluide caloporteur. Préférentiellement, la tubulure d'entrée 7 est agencée en partie supérieure de la cuve 5. Le fluide caloporteur chaud circule au travers du faisceau de tubes 6 en direction de l'extrémité inférieure de la cuve 5 assurant ainsi un échange thermique du fluide caloporteur chaud vers le ou les MCP(s) 1,2, 3 contenus dans la cuve 5. Le fluide caloporteur refroidi 15 ressort par la tubulure de sortie 8. Préférentiellement, la tubulure de sortie 8 est agencée en partie inférieure de la cuve 5.

Le procédé selon l'invention comprend une étape d'agitation, par le dispositif d'injection de gaz 11 des MCPs à l'état liquide dans la cuve 5 pour obtenir le mélange de MCPs 4 à l'état liquide.

L'étape d'agitation débute avantageusement dès qu'au moins un des MCPs introduits est à l'état liquide. Préférentiellement, l'étape d'agitation débute lorsque les MCPs contenus dans la cuve 5 sont à l'état liquide.

Selon une possibilité, l'étape d'agitation est donc partiellement simultanée au chauffage. C'est-à-dire que l'étape d'agitation se déroule au moins partiellement en parallèle de l'étape de chauffage. Plus précisément, l'étape de chauffage débute préférentiellement avant l'état d'agitation ce qui permet de faire passer le ou les MCPs de l'état solide à l'état liquide, puis l'étape d'agitation démarre sans que l'étape de chauffage ne soit arrêtée.

Préférentiellement, l'étape de chauffage est réalisée à une température supérieure aux températures de fusion de chaque MCP 1, 2, 3 destiné à former le mélange de MCPs 4. Préférentiellement, la température du fluide caloporteur est supérieure à la température de fusion la plus élevée des MCPs 1, 2, 3 utilisés pour former le mélange MCPs 4.

Selon l'invention, avantageusement l'étape d'agitation comprend la formation de bulles 12 par le dispositif d'injection de gaz 11. Les bulles 12 débouchent de l'injecteur 19 en partie inférieure de la cuve 5 puis remontent au travers des MCPs 1, 2, 3 à l'état liquide jusqu'à la partie supérieure de la cuve. Lorsque les bulles 12 traversent les MCP à l'état liquide, elle provoque une agitation permettant d'aboutir à un mélange de MCPs 4 homogène. On entend que le mélange de MCPs 4 est homogène, car les MCPs 1, 2, 3 introduits forment une seule phase.

Selon une possibilité, le système de stockage thermique comprend une évacuation en partie supérieure configurée pour évacuer le gaz des bulles 12. L'évacuation est préférentiellement parée pour maintenir un ciel de gaz 13 en partie supérieure de la cuve lorsque le couvercle 18 est refermé.

Selon un mode de réalisation préféré, l'étape d'agitation, une fois le remplissage de la cuve terminée, se poursuit ou se déroule sur une durée comprise entre 1 et 20 heures.

Préférentiellement, le procédé comprend la mise en place du module d'introduction dans la cuve 5, préférentiellement avant le remplissage de la cuve, puis le retrait du module d'introduction, une fois le remplissage de la cuve terminé.

Selon une possibilité, le procédé comprend la mise en place du dispositif d'injection de gaz 11 dans la cuve 5 avant le début de l'étape d'agitation. Cette étape de mise en place se fait par la partie supérieure de la cuve 5 lorsque le couvercle 18 a été retiré. Préférentiellement, le procédé comprend le retrait du dispositif d'injection de gaz 11 de la cuve 5 à la fin du procédé de préparation du mélange de MCP et avantageusement avant une étape de stockage et déstockage de l'énergie thermique.

Selon un exemple préféré, le procédé comprend une étape de refroidissement du mélange de MCP à l'état liquide par la circulation du fluide caloporteur 3 dans le système de circulation de sorte à cristalliser le mélange de MCPs 4. Le fluide caloporteur 3 pénètre dans le faisceau de tubes 6 par la tubulure d'entrée 8, préférentiellement agencée en partie inférieure de la cuve 5. Le fluide caloporteur circule au travers du faisceau de tubes 6 depuis la partie inférieure de la cuve 5 en direction de la partie supérieure de la cuve 5. Au cours du trajet, fluide caloporteur récupère l'énergie thermique du mélange de MCPs 4 conduisant à la cristallisation et au réchauffement du fluide caloporteur. Le fluide caloporteur réchauffé ressort du faisceau de tubes 6 en partie supérieure de la cuve 5 par la tubulure de sortie 7, préférentiellement agencée en partie supérieure de la cuve 5.

Selon une possibilité, l'étape d'agitation peut se poursuivre pendant cette étape de refroidissement du mélange de MCPs 4 permettant ainsi de favoriser la cristallisation du mélange de MCPs 4. Cette possibilité est envisageable selon le mode de réalisation illustrée aux figures 1A à 1D dans lequel le dispositif d'injection de gaz 11 est fixe dans le système de stockage thermique.

Les figures 1A à 1D illustrent un premier mode de réalisation dans lequel le dispositif d'injection de gaz est fixe, Les quatre figures successives 1A, 1B, 1C, 1D illustrant les différentes phases du procédé.

La figure 1A représente le système de stockage thermique dont la cuve 5 est vide, le couvercle 18 de la cuve 5 a été retiré, le dispositif d'injection de gaz 11 est agencé de manière fixe en partie inférieure de la cuve 5.

La figure 1B illustre l'étape d'introduction de la cuve 5 de chaque MCP 1,2 à l'état solide. Sur cette figure, le premier MCP 1 est introduit dans la cuve 5 à l'état solide simultanément à l'introduction du deuxième MCP 2 à l'état solide. Avantageusement, chaque MCP 1, 2 est introduit indépendamment l'un de l'autre préférentiellement par un module d'introduction préférentiellement par une canne de transfert indépendante. Avantageusement, à cette étape illustrée à la figure 1B le chauffage de la cuve 5 est en action. À cet effet, le fluide caloporteur chaud 14 pénètre dans le faisceau de tubes 6 par la tubulure d'entrée 7 agencée en partie supérieure de la cuve 5, puis le fluide caloporteur refroidi, après avoir échangé avec les MCPs 1,2 contenus dans la cuve 5, ressort du faisceau de tubes 6 par la tubulure de sortie 7 agencée en partie inférieure de la cuve 5.

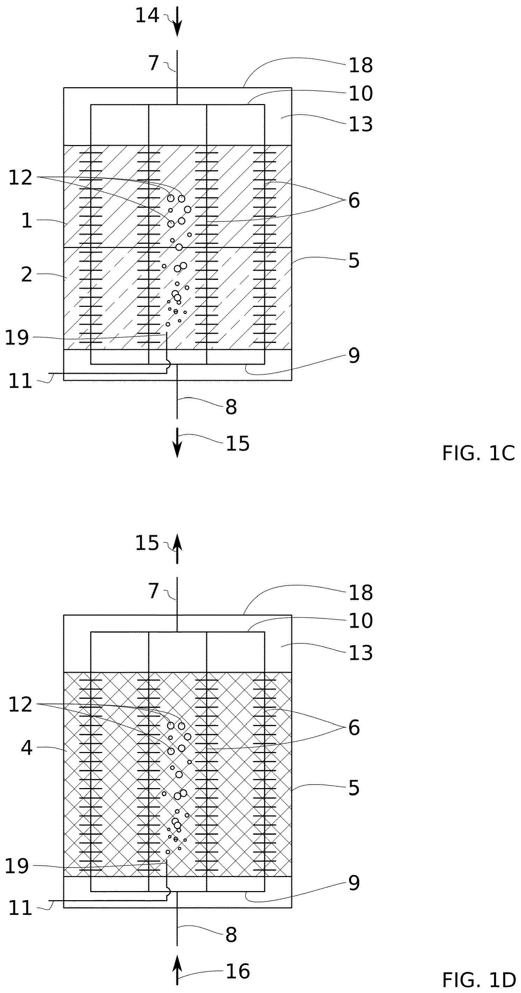

À l'issue de l'état d'introduction, l'étape de chauffage se poursuit comme illustrée à la figure 1C et l'étape d'agitation débute. À l'issue de l'étape d'introduction, le couvercle 18 est avantageusement remis en place sur la cuve 5 ou les trappes sont refermées.

Au début de l'étape d'agitation telle qu'illustrée à la figure 1C, le premier MCP 1 et le deuxième MCP 2 sont à l'état liquide dans la cuve 5, mais ne sont pas sous forme d'un mélange de MCPs 4 homogène, en effet, le premier MCP 1 et le deuxième MCP 2 sont à l'état liquide sous deux phases distinctes. L'agitation formée par les bulles 12 produites par l'injecteur 19 du dispositif d'injection de gaz 11 se poursuit permettant d'obtenir comme illustré à la figure 1D un mélange de MCPs 4 homogène. L'état de chauffage se poursuit par la circulation du fluide caloporteur chaud dans le système de circulation. Le fluide caloporteur chaud 14 pénètre dans le faisceau de tubes 6 par la tubulure d'entrée 7 agencée en partie supérieure de la cuve 5 puis traverse la cuve 5 en assurant des échanges thermiques éventuels avec les MCPs 1,2, et ressort par la tubulure de sortie de fluide 8 agencée en partie inférieure de la cuve 5. Le fluide caloporteur qui ressort est avantageusement à une température sensiblement équivalente à la température d'entrée, le premier et le deuxième MCPs 1,2 ayant été portés à une température supérieure à leur température de fusion et avantageusement équivalente à la température du fluide caloporteur.

En figure 1D est illustrée l'étape de refroidissement du mélange de MCPs 4 par la circulation du fluide caloporteur dans le système de circulation. Le fluide caloporteur froid 16 pénètre dans le faisceau de tubes 6 par la tubulure d'entrée 8 agencée en partie inférieure de la cuve 5. Le fluide caloporteur froid traverse la cuve 5 et échange l'énergie thermique avec le mélange de MCPs 4 chaud assurant ainsi son refroidissement et sa cristallisation. Le fluide caloporteur réchauffé ressort du faisceau de tubes 6 par la tubulure de sortie 7 agencée en partie supérieure de la cuve 5.

Les figures 2A à 2D illustre un deuxième mode de réalisation dans lequel le dispositif d'injection de gaz 11 est amovible. Les quatre figures successives 2A, 2B, 2C, 2D illustrent les différentes phases du procédé de réalisation de l'invention.

La figure 2A représente le système de stockage thermique dont la cuve 5 est vide, le couvercle 18 de la cuve 5 a été retiré, le dispositif d'injection de gaz 11 n'est pas encore introduit dans la cuve 5.

La figure 2B illustre l'étape d'introduction dans la cuve 5 de chaque MCP 1,2, 3 à l'état solide. Sur cette figure, le premier MCP 1 est introduit dans la cuve 5 à l'état solide simultanément à l'introduction du deuxième MCP 2 à l'état solide simultanément à l'introduction du troisième MCP 3. Avantageusement, chaque MCP 1, 2, 3 est introduit indépendamment l'un de l'autre préférentiellement par un module d'introduction préférentiellement par une canne de transfert indépendante. Avantageusement, à cette étape illustrée à la figure 2B le chauffage de la cuve 5 est en action. À cet effet, le fluide caloporteur chaud 14 pénètre dans le faisceau de tubes 6 par la tubulure d'entrée 7 agencée en partie supérieure de la cuve puis le fluide caloporteur refroidi après avoir échangé avec les MCPs 1,2, 3 contenus dans la cuve 5, ressort du faisceau de tubes 6 par la tubulure de sortie 7 agencée en partie inférieure de la cuve 5.

À l'issue de l'étape d'introduction, l'étape de chauffage se poursuit comme illustrée à la figure 2C et l'étape d'agitation débute. Le dispositif d'injection de gaz 11 est mis en place. Une canne d'injection de gaz temporaire munie d'un éjecteur 19 est introduite dans la cuve 5 de sorte que l'éjecteur 19 soit positionné en partie inférieure de la cuve 5.

À cette étape, le couvercle 18 n'est pas encore remis en place, ou la trappe refermée, puisque le dispositif d'injection de gaz 11 amovible doit encore être retiré. Au début de l'étape d'agitation telle qu'illustrée à la figure 2C, le premier MCP 1, le deuxième MCP 2 et le troisième MCP 3 sont à l'état liquide dans la cuve 5, mais ne sont pas sous forme d'un mélange homogène. En effet, ils sont sous forme de trois phases liquides distinctes. L'agitation formée par les bulles 12 produites par l'injecteur 19 du dispositif d'injection de gaz 11 se poursuit permettant d'obtenir comme illustré à la figure 2D un mélange de MCPs 4 homogène. L'étape de chauffage se poursuit par la circulation du fluide caloporteur chaud dans le système de circulation. Le fluide caloporteur chaud 14 pénètre dans le faisceau de tubes 6 par la tubulure d'entrée 7 agencée en partie supérieure de la cuve 5 puis traverse la cuve 5 en assurant des échanges thermiques éventuels avec le mélange de MCPs 4, et ressort par la tubulure de sortie de fluide 8 agencée en partie inférieure de la cuve 5. Le fluide caloporteur qui ressort est avantageusement à une température sensiblement équivalente à la température d'entrée, le premier, le deuxième et le troisième MCP 1,2, 3 ayant été portés à une température supérieure à leur température de fusion, avantageusement équivalente à la température du fluide caloporteur.

En figure 2D est illustrée l'étape de refroidissement du mélange de MCPs 4 par la circulation du fluide caloporteur dans le système de circulation. Préférentiellement, à cette étape le couvercle 18 peut-être mise en place sur la cuve 5 après que le dispositif d'injection de gaz amovible 11 ait été retiré de la cuve 5. Le fluide caloporteur froid 16 pénètre dans le faisceau de tubes 6 par la tubulure d'entrée 8 agencée en partie inférieure de la cuve 5. Le fluide caloporteur froid traverse la cuve 5 est échange d'énergie thermique avec le mélange de MCPs 4 chaud assurant ainsi son refroidissement et sa cristallisation. Le fluide caloporteur réchauffé ressort du faisceau de tubes 6 par la tubulure de sortie 7 agencée en partie supérieure de la cuve 5.

Une fois le procédé de préparation du système de stockage thermique selon l'invention terminé, le SST fonctionne de la manière suivante.

Le SST fonctionne suivant trois phases majeures : la charge, le stockage et la décharge.
- Une phase dite de charge, durant laquelle le fluide caloporteur cède sa chaleur au mélange de MCPs 4, entrainant la fusion de celui-ci. La température du fluide est alors supérieure à la température de fusion du mélange de MCPs 4 et son sens de circulation est vertical descendant.
- Une phase, dite de stockage ou d'attente, au cours de laquelle la circulation du fluide caloporteur est arrêtée et le mélange de MCPs 4 conserve l'énergie thermique stockée, hors considération des déperditions thermiques avec l'extérieur.
- Une phase dite de décharge durant laquelle le fluide caloporteur circule à une température inférieure à la température de solidification du mélange de MCPs 4, entrainant la cristallisation du matériau et le réchauffement du fluide caloporteur. Le fluide circule dans le sens vertical ascendant.

Dans ce système, le stockage est dit entièrement chargé quand tout le mélange de MCPs 4 est liquide. Il est entièrement déchargé quand tout le mélange de MCPs 4 est solide.

Exemple 1 : Remplissage d'une cuve d'un système de stockage thermique incorporant un dispositif d'injection de gaz avec l'eutectique Xylitol/Erythritol.

Le Xylitol (T_{fusion} = 93°C) et l'Erythritol (T_{fusion} = 118°C) sont deux MCPs connus de la littérature pour leur importante densité de stockage. Ils peuvent former un eutectique binaire tout aussi prometteur et ayant une température de fusion plus faible (T_{fusion} = 82°C). Un dispositif d'injection de gaz 11 d'azote est prévu, préférentiellement le dispositif est fixe de sorte à permettre également d'amorcer la cristallisation du mélange de MCPs 4. L'azote permet ici d'éviter une éventuelle dégradation chimique des deux composants au-dessus de leur température de fusion respective. Cet exemple est illustré aux figures 1A à 1D, l'érythritol (deuxième MCP 2) et le Xylitol (premier MCP 1) sont versés dans la cuve 5 de stockage sous forme de poudre à température ambiante. Pour obtenir l'eutectique, il est nécessaire de contrôler les proportions des deux MCPs. Au fur et à mesure du remplissage, le fluide caloporteur chaud circule dans le faisceau de tubes 6 pour faire fondre les poudres de MCP 1,2. L'entrée chaude 14 (généralement en haut de cuve) doit être à une température supérieure à 118°C, la température de fusion la plus élevée des deux MCPs.

En figure 1C, l'érythritol, le deuxième MCP 2 plus dense, est en bas de cuve 5 alors que le Xylitol, le premier MCP 1, reste dans la partie supérieure. Le bullage en bas de cuve 5 démarre afin d'homogénéiser progressivement les deux phases liquides. L'étape d'introduction, c'est-à-dire la phase de remplissage de poudre, est terminée et la cuve a été refermée. Ceci permet en particulier de créer un ciel de gaz 13 d'azote pour éviter la dégradation des deux MCPs 1,2, toujours maintenu à plus de 118°C.L'eutectique, mélange de MCPs 4 est obtenu après plusieurs heures d'agitation. Le système de stockage est prêt pour une première décharge thermique, le fluide caloporteur froid 16 arrive par le bas de cuve 5 pour ressortir chaud 15 en haut de cuve 5.

### LISTE DE REFERENCES

- 1.: Premier MCP
- 2.: Deuxième MCP
- 3.: Troisième MCP
- 4.: Mélange de MCP
- 5.: Cuve
- 6.: Faisceau de tubes plongeant dans le MCP
- 7.: Tubulure de circulation d'entrée ou de sortie du fluide caloporteur
- 8.: Tubulure de circulation d'entrée ou de sortie du fluide caloporteur
- 9.: Collecteur inférieur
- 10.: Collecteur supérieur
- 11.: Dispositif d'injection de gaz
- 12.: Bulles
- 13.: Ciel de gaz
- 14.: Entrée de fluide caloporteur chaud
- 15.: Sortie de fluide caloporteur chaud
- 16.: Entrée de fluide caloporteur froid
- 17.: Sortie de fluide caloporteur froid
- 18.: Couvercle
- 19.: Injecteur

## Revendications

1. Procédé de préparation d'un système de stockage thermique (SST) par un mélange de matériaux à changement de phase (MCP) liquide/solide comprenant :
- une cuve (5) de stockage d'énergie thermique destinée à recevoir le mélange de MCPs (4), et
- un système de circulation plongeant dans la cuve (5), destiné à la circulation d'un fluide caloporteur issu d'un réseau externe de circulation du fluide caloporteur, pour stocker et extraire de la chaleur du mélange de MCPs (4), et
- un dispositif d'injection de gaz (11) configuré pour former des bulles (12) de gaz en partie inférieure de la cuve (5) dans le mélange de MCPs (4),
**caractérisé en ce qu'**il comprend les étapes suivantes :
- d'introduction dans la cuve (5), à l'état solide, de chaque MCP (1,2, 3), destiné à former le mélange de MCPs (4)
- de chauffage de la cuve par la circulation du fluide caloporteur chaud dans le système de circulation pour faire passer chaque MCP (1,2, 3) introduit dans la cuve (5) de l'état solide à l'état liquide,
- d'agitation par le dispositif d'injection de gaz (11) des MCPs (1,2, 3) à l'état liquide dans la cuve (5) pour obtenir le mélange de MCPs (4) à l'état liquide.

2. Procédé selon la revendication précédente dans lequel le chauffage de la cuve (5) est au moins partiellement simultané à l'introduction dans la cuve (5) de chaque MCP (1,2, 3) à l'état solide.

3. Procédé selon l'une quelconque des revendications précédentes dans lequel l'agitation est au moins partiellement simultanée au chauffage.

4. Procédé selon l'une quelconque des revendications précédentes dans lequel chaque MCP (1,2, 3) est introduit dans la cuve (5) sous forme de poudre.

5. Procédé selon l'une quelconque des revendications précédentes dans lequel chaque MCP (1,2, 3) introduit lors de l'étape d'introduction dans la cuve (5) est à température ambiante entre 20 et 25°C.

6. Procédé selon l'une quelconque des revendications précédentes dans lequel l'introduction dans la cuve (5) est réalisée par au moins une canne de transfert de poudre introduite dans la cuve (5).

7. Procédé selon l'une quelconque des revendications précédentes dans lequel le chauffage de la cuve (5) est réalisé à une température supérieure aux températures de fusion de chaque MCP (1,2, 3).

8. Procédé selon l'une quelconque des revendications précédentes ne comprenant pas de mélange des MCPs (4) à l'état solide, préalable à l'introduction des MCPs (1,2, 3) dans la cuve (5).

9. Procédé selon l'une quelconque des revendications précédentes dans lequel l'agitation est réalisée par les bulles (12) de gaz, le gaz étant choisi parmi le groupe comprenant de l'air, ou un gaz inerte tel que de l'azote.

10. Procédé selon l'une quelconque des revendications précédentes comprenant une étape de mise en place et de retrait du dispositif d'injection de gaz (11) dans la cuve (5).

11. Système de stockage thermique par un mélange de matériaux à changement de phase (MCP) liquide/solide pour la mise en œuvre du procédé selon l'une quelconque des revendications 1 à 10 comprenant :
- une cuve (5) de stockage d'énergie thermique destinée à recevoir le mélange de MCPs (4), et
- un système de circulation plongeant dans la cuve (5), destiné à la circulation d'un fluide caloporteur issu d'un réseau externe de circulation du fluide caloporteur, pour stocker et extraire de la chaleur du mélange de MCPs (4), et
- un dispositif d'injection de gaz (11) configuré pour former des bulles (12) de gaz en partie inférieure de la cuve (5) dans le mélange de MCPs (4) permettant de générer une agitation des MCPs (1,2, 3) à l'état liquide dans la cuve(5) pour obtenir le mélange de MCPs (4) à l'état liquide, et
- un module d'introduction dans la cuve (5), à l'état solide, de chaque MCP (1,2, 3), destiné à former le mélange de MCPs (4), le module d'introduction étant amovible de sorte que le système de stockage thermique soit apte à prendre une première configuration de préparation dans laquelle le module d'introduction est agencé sur la cuve pour permettre l'introduction dans la cuve (5) de chaque MCP (1,2, 3), à l'état solide, destiné à former le mélange de MCPs (4), et à prendre une deuxième configuration de fonctionnement, dans laquelle le module d'introduction est retiré ne permettant pas l'introduction dans la cuve (5) de chaque MCP (1,2, 3), à l'état solide, destiné à former le mélange de MCPs (4).

## Patentansprüche

1. Verfahren zur Vorbereitung eines Systems zur thermischen Speicherung (STS) durch eine Mischung aus flüssigen/festen Phasenwechselmaterialien (PCM), Folgendes umfassend:
- einen Behälter (5) zur Speicherung thermischer Energie, bestimmt zur Aufnahme der Mischung aus PCMs (4) und
- ein in den Behälter (5) eingetauchtes Zirkulationssystem, bestimmt für die Zirkulation eines Wärmeträgerfluids aus einem externen Wärmeträgerfluid-Zirkulationsnetz, um Wärme aus der PCM-Mischung (4) zu speichern und zu entziehen, und
- eine Gasinjektionsvorrichtung (11), die konfiguriert ist, um im unteren Teil des Behälters (5) in der PCM-Mischung (4) Gasblasen (12) zu bilden,
**dadurch gekennzeichnet, dass** es die folgenden Schritte umfasst:
- Einbringen jedes PCM (1, 2, 3), das zur Bildung der PCM-Mischung (4) bestimmt ist, im festen Zustand in den Behälter (5)
- Erhitzen des Behälters durch die Zirkulation des heißen Wärmeträgerfluids in dem Zirkulationssystem, um jedes in den Behälter (5) eingebrachte PCM (1, 2, 3) vom festen in den flüssigen Zustand zu überführen,
- Rühren durch die Gasinjektionsvorrichtung (11) der PCMs (1, 2, 3) im flüssigen Zustand in dem Behälter (5), um die PCM-Mischung (4) im flüssigen Zustand zu erhalten.

2. Verfahren nach dem vorhergehenden Anspruch, wobei das Erhitzen des Behälters (5) zumindest teilweise gleichzeitig mit dem Einbringen jedes PCM (1, 2, 3) im festen Zustand in den Behälter (5) erfolgt.

3. Verfahren nach einem der vorhergehenden Ansprüche, wobei das Rühren zumindest teilweise gleichzeitig mit dem Erhitzen erfolgt.

4. Verfahren nach einem der vorhergehenden Ansprüche, wobei jedes PCM (1, 2, 3) in Pulverform in den Behälter (5) eingebracht wird.

5. Verfahren nach einem der vorhergehenden Ansprüche, wobei jedes PCM (1, 2, 3), das während des Schritts des Einbringens in den Behälter (5) eingeführt wird, eine Raumtemperatur zwischen 20 und 25 °C aufweist.

6. Verfahren nach einem der vorhergehenden Ansprüche, wobei das Einbringen in den Behälter (5) durch mindestens einen Förderstab für in den Behälter (5) eingebrachtes Pulver erfolgt.

7. Verfahren nach einem der vorhergehenden Ansprüche, wobei das Erhitzen des Behälters (5) auf eine Temperatur oberhalb der Schmelztemperaturen jedes PCMs (1, 2, 3) erfolgt.

8. Verfahren nach einem der vorhergehenden Ansprüche, das kein Mischen der PCMs (4) im festen Zustand vor dem Einbringen der PCMs (1, 2, 3) in den Behälter (5) umfasst.

9. Verfahren nach einem der vorhergehenden Ansprüche, wobei das Rühren durch die Gasblasen (12) bewirkt wird, wobei das Gas aus der Gruppe ausgewählt ist, die Luft und ein Inertgas wie Stickstoff umfasst.

10. Verfahren nach einem der vorhergehenden Ansprüche, umfassend einen Schritt des Einsetzens und Entfernens der Gasinjektionsvorrichtung (11) in den/dem Behälter (5).

11. System zur thermischen Speicherung durch eine Mischung aus flüssigen/festen Phasenwechselmaterialien (PCM) zur Durchführung des Verfahrens nach einem der Ansprüche 1 bis 10, Folgendes umfassend:
- einen Behälter (5) zur Speicherung thermischer Energie, bestimmt zur Aufnahme der Mischung aus PCMs (4), und
- ein in den Behälter (5) eintauchendes Zirkulationssystem, das zur Zirkulation eines Wärmeträgerfluids aus einem externen Wärmeträgerfluid-Zirkulationsnetz bestimmt ist, um Wärme aus der PCM-Mischung (4) zu speichern und zu entziehen, und
- eine Gasinjektionsvorrichtung (11), die konfiguriert ist, um Gasblasen (12) im unteren Teil des Behälters (5) in der PCM-Mischung (4) zu bilden, wodurch ein Rühren der PCMs (1, 2, 3) im flüssigen Zustand in dem Behälter (5) erzeugt werden kann, um die PCM-Mischung (4) im flüssigen Zustand zu erhalten, und
- ein Modul zum Einbringen jedes PCM (1, 2, 3) in festem Zustand in den Behälter (5), um die PCM-Mischung (4) zu bilden, wobei das Einbringungsmodul abnehmbar ist, so dass das System zur Speicherung thermischer Energie in der Lage ist, eine erste Vorbereitungskonfiguration einzunehmen, in der das Einbringungsmodul auf dem Behälter angeordnet ist, um das Einbringen jedes PCM (1, 2, 3) in den Behälter (5) in festem Zustand zur Bildung der PCM-Mischung (4) zu ermöglichen, und eine zweite Betriebskonfiguration einzunehmen, in der das Einbringungsmodul entfernt ist, wodurch das Einbringen jedes PCM (1, 2, 3) in festem Zustand zur Bildung der PCM-Mischung (4) in den Behälter (5) nicht ermöglicht wird.

## Claims

1. Method for preparing a heat storage system (HSS) by a mixture of liquid/solid phase change materials (PCM) comprising:
- a vessel (5) for storing thermal energy intended to receive the mixture of PCMs (4), and
- a circulation system immersing in the vessel (5), intended for the circulation of a heat-transfer fluid coming from an external circulation network of the heat-transfer fluid, to store and extract heat from the mixture of PCMs (4), and
- a gas injection device (11) configured to form gas bubbles (12) in the lower part of the vessel (5) in the mixture of PCMs (4),
**characterised in that** it comprises the following steps:
- introducing, in the vessel (5), in the solid state, each PCM (1, 2, 3), intended to form the mixture of PCMs (4),
- heating the vessel by the circulation of the hot heat-transfer fluid in the circulation system to make each PCM (1, 2, 3) introduced in the vessel (5) pass from the solid state to the liquid state,
- stirring by the gas injection device (11) of the PCMs (1, 2, 3) in the liquid state in the vessel (5) to obtain the mixture of PCMs (4) in the liquid state.

2. Method according to the preceding claim, wherein the heating of the vessel (5) is at least partially simultaneous to the introduction in the vessel (5) of each PCM (1, 2, 3) in the solid state.

3. Method according to any one of the preceding claims, wherein the stirring is at least partially simultaneous to the heating.

4. Method according to any one of the preceding claims, wherein each PCM (1, 2, 3) is introduced in the vessel (5) in powder form.

5. Method according to any one of the preceding claims, wherein each PCM (1, 2, 3) introduced during the step of introducing in the vessel (5) is at ambient temperature between 20 and 25°C.

6. Method according to any one of the preceding claims, wherein the introduction in the vessel (5) is done by at least one rod for transferring powder introduced in the vessel (5).

7. Method according to any one of the preceding claims, wherein the heating of the vessel (5) is done at a temperature greater than the melting points of each PCM (1, 2, 3).

8. Method according to any one of the preceding claims, not comprising a mixture of PCMs (4) in the solid state, prior to introducing PCMs (1, 2, 3) in the vessel (5).

9. Method according to any one of the preceding claims, wherein the stirring is done by gas bubbles (12), the gas being chosen from among the group comprising air, or an inert gas such as nitrogen.

10. Method according to any one of the preceding claims, comprising a step of placing and removing a gas injection device (11) in the vessel (5).

11. System for storing heat by a mixture of liquid/solid phase change materials (PCM) for the implementation of the method according to any one of claims 1 to 10, comprising:
- a vessel (5) for storing thermal energy intended to receive the mixture of PCMs (4), and
- a circulation system immersing in the vessel (5), intended for the circulation of a heat-transfer fluid coming from an external circulation network of the heat-transfer fluid, to store and extract heat from the mixture of PCMs (4), and
- a gas injection device (11) configured to form gas bubbles (12) in the lower part of the vessel (5) in the mixture of PCMs (4), making it possible to generate a stirring of the PCMs (1, 2, 3) in the liquid state in the vessel (5) to obtain the mixture of PCMs (4) in the liquid state, and
- a module for introducing, in the vessel (5), in the solid state, each PCM (1, 2, 3), intended to form the mixture of PCMs (4), the introduction module being removable, such that the heat storage system is capable of taking a first preparation configuration, in which the introduction module is arranged on the vessel to enable the introduction in the vessel (5) of each PCM (1, 2, 3) in the solid state, intended to form the mixture of PCMs (4), and to take a second operating configuration, in which the introduction module is removed, not enabling the introduction in the vessel (5) of each PCM (1, 2, 3), in the solid state, intended to form the mixture of PCMs (4).
